# EUROPEAN PATENT SPECIFICATION

(11) **EP 1 356 006 B1**
(45) Date of publication and mention of the grant of the patent: **17.08.2011**
(21) Application number: 02732158.7
(22) Date of filing: 10.01.2002
(51) Int. Cl.: C09D 183/14, C09D 183/04, C09D 9/00

(54) **METHOD OF PREPARING A LACQUER COMPOSITION**
HERSTELLUNGSVERFAHREN FÜR EINE LACKZUSAMMENSETZUNG
PROCEDE DE PREPARATION D'UNE COMPOSITION DE VERNIS-LAQUE

(30) Priority: 18.01.2001 EP 01200191
(43) Date of publication of application: 29.10.2003
(73) Proprietor: Koninklijke Philips Electronics N.V., 5621 BA Eindhoven (NL)
(72) Inventor: WIELSTRA, Ytsen, NL-5656 AA Eindhoven (NL); WINKEL, Jolanda, H., S., NL-5656 AA Eindhoven (NL)
(74) Representative: van Wermeskerken, Stephanie Christine
(86) International application number: PCT/IB2002/000047
(87) International publication number: WO 2002/057381

(56) References cited:
- EP-A- 0 287 877
- EP-A- 0 611 812
- EP-A- 0 768 352
- WO-A-01/64804
- US-A- 4 211 823
- US-A- 5 200 237
- PATENT ABSTRACTS OF JAPAN vol. 018, no. 201 (C-1188), 8 April 1994 (1994-04-08) & JP 06 001847 A (FURUKAWA ELECTRIC CO LTD:THE), 11 January 1994 (1994-01-11) & DATABASE WPI/DERWENT [Online] AN 1994-045513,

## Description

The present invention relates to a method of preparing a lacquer composition, said method comprising the steps of mixing together an organosilane compound and silica particles under basic conditions. The invention also relates to a lacquer composition which is obtainable by the method according to the invention, as well as to a method of applying a lacquer coating to a substrate.

The lacquer compositions of the above mentioned type, also referred to as sol-gel materials, are usually made by hydrolysis of silanes forming Si-OH groups, which are coupled towards Si-O-Si bonds upon curing. Silanes can be hydrolyzed both in an acidic environment as well as in a basic environment. However, the behavior of the Si-OH groups in an acidic environment differs from the behavior of said groups in a basic environment. The different behavior of the Si-OH groups in basic and acidic conditions is, inter alia, disclosed in "Sol-Gel Science; The Physics and Chemistry of Sol-Gel Processing", chapter 2, by C.,J. Brinker and G.W Scherer.

Under acidic conditions, coupling of the Si-OH groups is relatively slow. This slow coupling results in a positive effect on the potlife of a lacquer made under the same conditions. Upon curing of the material, a forced coupling takes place forming chain-like structures which resemble normal organic polymers.

However, under basic conditions, coupling of the Si-OH groups is relatively fast, due to the high reactivity of the Si-OH groups. As a consequence of said fast coupling of Si-OH groups particles of nanometer size are formed, instead of chain-like structures. This process is hard to control and can result in flocculation and gelation. Upon curing of the coating the layers turn white.

The present invention aims to provide for a method of preparing a lacquer composition under basic conditions, which method provides for a controlled coupling of Si-OH groups and which method prevents premature gelation.

To this end, the present invention provides for a method according to the preamble, which method is characterized in that a metal alkoxide is added to the reaction mixture.

By adding a metal alkoxide to the basic reaction mixture the coupling reaction can be suppressed. As the metal complex reacts with SiOH forming metal-OSi bonds an uncontrolled growth is prevented. An important advantage of the method according to the present invention is that new materials can be made with different properties.

The basic conditions under which the lacquer composition is prepared, are preferably caused by the addition of ammonia to the reaction mixture.

The benefit of the method according to the present invention especially applies for lacquer compositions to which silica particles are added in order to provide for increased strength and reduced shrinkage. As the iso-electric point of silica is 2, and therefore the silica particles are electrically neutral at pH 2, a poor stabilization of silica particles is obtained at said pH. Under more basic conditions the particles are negatively charged resulting in improved stability and reduced tendency towards flocculation. Therefore, upon curing of such basic lacquer improved packing of the particles is obtained with better properties of the final coating.

The metal alkoxide preferably comprises a zirconium alkoxide or an aluminum alkoxide or a mixture thereof. Also titanium alkoxide can be used.

Preferably, the metal alkoxide comprises a diketonate, such as metal ethylacetoacetate or a metal acetylacetone or a mixture thereof.

Although the organosilane compound may comprise different reactive groups, it is preferred to use an epoxysilane, preferably 3-glycidyloxypropyltrimethoxysilane (GLYMO).

In order to influence the properties of the network of the cured lacquer coating, advantageously at least a second organosilane compound is present.

In particular the mechanical strength of the cured lacquer layer can be improved by using a tetra-alkoxysilane, such as tetra-alkylorthosilicate (TEOS) or tetramethylorthosilicate (TMOS).

The properties of the lacquer composition can further be improved by the addition of organic compounds, such as epoxides and polyalcohols or by the addition of inorganic materials, such as metaloxides, like aluminumoxide or titaniumoxide.

The present invention further relates to a lacquer composition which is obtainable by the method according to the present invention as disclosed in the above.

Said lacquer composition has excellent film-forming properties. Moreover, the lacquer composition may be sprayed on the substrate to form a lacquer coating, if necessary by adding a diluting agent. The lacquer coating which is obtained by curing the lacquer composition according to the present invention is transparent and meets high quality standards from an optical and an esthetical point of view. Moreover, the lacquer coating proves to be wear-resistant and scratch-resistant, even after prolonged exposure to solvents or compositions for personal care, such as shaving lotions. This makes the application of the lacquer useful in electric shavers, such as the shaver head or a housing.

Furthermore, the present invention relates to a method of applying a lacquer coating to a substrate in which method a lacquer composition is applied to the substrate and cured, thereby forming the lacquer coating. Said method is characterized in that a lacquer composition according to the present invention is used.

The lacquer composition can be provided by means of methods known per se, such as spraying, spin-coating, curtain-coating or dip-coating. The lacquer composition can be cured by means of heating. The appropriate temperature and the duration of the thermal treatment are governed by the lacquer composition used and can be determined in a manner known to the skilled person, for example by measuring the hardness of the lacquer coating.

Finally, the invention relates to a product which is provided with a lacquer coating, said product being characterized in that the lacquer coating is obtained by using the method of applying a lacquer coating to a substrate according to the present invention.

The lacquer composition according to the invention can be applied to a great variety of products. The lacquer can have both the function of a protective coating as well as improving the attractive properties of the product provided with the lacquer. Examples of products which may be provided with the lacquer are housings for electr(on)ical products, such as television receivers, personal digital assistants, mobile phones, and personal computers; personal-care products, such as shavers; domestic appliances, such as irons, and luminaires; vehicle parts, such as doorhandles and roofbars for cars, bicycle parts, and boat parts.

It is to be noted that EP-A-0 768 352 discloses a material for forming silica base coated insulation films which is obtained from (a) an alkoxysilane and/or a partially hydrolized product thereof, (b) a fluorine containing alkoxysilane, (c) an alkoxide of a metal other than Si and/or a derivative thereof and (d) an organic solvent; and a process for its production.

It is to be noted that US-A-5 200 237 discloses a mixture of a monomeric organoalkoxysilane, a metal alkoxide M(OR)n (wherein M is a transition metal. R is CH3, C2H5 or C3H7, and n is 3 or 4), alcohol, water and a chlorine containing acid.

It is to be noted that JP-06 001847 discloses a composition obtained by reacting a mixture comprising 100pts.wt mixture comprising a linear silicone oligomer containing at least to reactive groups in he molecule and an organic compound of the formula M(OR)n wherein M is a silicon atom or a metallic atom, R is alkyl or alkoxyl, and n is a neutral number of 2-4 in aration of 80:20 - 20:800 20-300 pts.wt. inorganic filler and 0.01-25 pts.wt. metallic oxide sol at 60-90°C.

It is to be noted that EP-A-0287 877 discloses a composite substance made of a polymer that contains an inorganic moiety and an organic moiety in the molecule, wherein said polymer is obtainable by a process consisting of adding at least one acid catalyst to a mixture containing at least one silane coupling agent and at least one alkoxide and adding as a base catalyst a tertiary amine.

It is to be noted that non-prepublished WO01/64804 describes an aqueous coating Composition is formed by admixing the following ingredients (A), one or both of (B) and/or (C), and (D): (A) at least one silane of the formula (1) R1Si(OR2)3 wherein R1 is a lower alkyl group, a phenyl group or a functional group, including at least one of vinyl, acrylic, amino, mercapto, or vinyl chloride functional group; and R2 is a lower alkyl group: (B) base component; selected from the group consisting of alkanoic acid having from about 1 to about 5 carbon atoms, H3BO3 and H3PO3; and (D) water.

It is to be noted that EP-A-0 611 812 A discloses a liquid coating composition for use in the formation of insulating films for liquid crystal display elements comprising a solution to be obtained by hydrolyzing a tetraalkoxysilane in an organic solvent in the presence of an alkaline catalyst; a hydrolyzed product of an alkoxysilane and/or a tetraalkoxy titanium and an aluminium salt and a deposition inhibitor, all having been uniformly mixed in an organic solvent.

It is to be noted that US-A-4 211 823 discloses a coating composition comprising components A, B, C and D wherein component A is a hydrolysate of a silane compound containing an epoxy group and not less than two alkoxy groups which are directly bonded to an Si atom in the molecule; component B comprises fine particles of silica which particles have an average diameter of about 1 to 100 mµ and wherein component C comprises an aluminium chelate compound, and wherein compound D comprises a solvent comprising more than about 1 weight percent water.

It is to be noted that JP 56-88468 discloses a method of stabilisation of a coating composition wherein the pH of a coating composition that contains the below mentioned components (A), (B), (C) and (D), is adjusted at 5.0-7.5.
(A) A hydrolysate, of a silane compound that has 2 or more alkoxy groups or acyloxy groups wherein at least, 1 epoxy group in the molecule has been coupled with a silicon atom,
(B) An aluminium chelate compound
(C) Microparticles of silica with an average particle diameter of ca. 1-100 mµ
(D) A polydentate ligand compound.

The hydrolysate of component (A) is produced by adding pure water or an acid aqueous solution of hydrochloric acid or sulphuric acid, and stirring.

The invention will be further elucidated by means of the following examples.

### Examples 1-3: Preparation of the metal alkoxides

### Example 1

A quantity of 17.4 g ethylacetoacetate was added to 63 g Zr(OC₃H₇)₄ (70% in propanol) at room temperature and the solution was stirred. The resulting solution in which ethylacetoacetate has bonded to the zirconium is called zirconium ethylacetoacetate (ZrEAA). When the amount of ethylacetoacetate was doubled Zr(EAA)₂ was formed.

### Example 2

A quantity of 13.4 g acetyleacetone was added to 63 g Zr(OC₃H₇)₄ (70% in propanol) at room temperature and the solution was stirred. Zirconium acetylacetone (Zr(AcAc)) was formed. When the amount of acetylacetone was doubled Zr(AcAc)₂ was formed.

### Example 3

A quantity of 40 g Al(OC₄H₉)₃ was added to 21 g ethylacetoacetate at room temperature and the solution was stirred. This resulted in the formation of a solution of aluminum ethylacetoacetate (A1EAA).

### Examples 4-9: Preparation of the lacquer compositions

### Example 4

Half of a mixture of 19.6 g glycidyloxypropyltrimethoxysilane (GLYMO), 8.6 g tetra-ethylorthosilicate (TEOS) and 30 g alcohol was added to 44 g of an aqueous suspension of silica particles (Ludox AS40, Dupont de Nemours), while the solution was stirred. After 2 minutes the other half of the mixture was added. After stirring during 7 minutes, 7.8 g A1EAA, prepared according to the method as disclosed in example 3, was added. Subsequently, 1.4 g ammonia (25%) was added to the solution. The pH was measured to be 7.36.

The mixture was observed for hydrolysis of the silanes. Hydrolysis is said to be complete when the composition gives proper wetting on a glass substrate.

After 4 days hydrolysis of the silanes was not completed yet.

### Example 5

Half of a mixture of 19.6 g GLYMO, 8.6 g TEOS and 30 g alcohol was added to 44 g Ludox AS40, while the solution was stirred. After 2 minutes the other half of the mixture was added. After stirring during 7 minutes, 7.8 g A1EAA, prepared according to the method as disclosed in example 3, was added. Subsequently, 2.8 g ammonia (25%) was added to the solution. The pH was measured to be 9.5.

Hydrolysis of the silanes was completed within 4 hours. After curing of the lacquer a transparent wear-resistant layer was obtained.

### Example 6

Half of a mixture of 23.7 g GLYMO, 5.2 g TEOS and 30 g alcohol was added to 44 g Ludox AS40, while the solution was stirred. After 2 minutes the other half of the mixture was added. After stirring during 7 minutes, 11.8 g ZrAcAc, prepared according to the method as disclosed in example 2, was added. Subsequently, 1.4 g ammonia (25%) was added to the solution. The pH was measured to be 9.0.

Hydrolysis of the silanes was completed within 4 hours. After curing of the lacquer a transparent wear-resistant layer was obtained.

### Example 7

Half of a mixture of 19.6 g GLYMO, 8.6 g TEOS and 30 g alcohol was added to 44 g Ludox AS40, while the solution was stirred. After 2 minutes the other half of the mixture was added. After stirring during 7 minutes, a mixture of 9.3 g ZrEAA and 3.9 g A1EAA, prepared according to the methods as disclosed in example 1 and 3 respectively, was added. Subsequently, 2.8 g ammonia (25%) was added to the solution. The pH was measured to be 10.0.

Hydrolysis of the silanes was completed within 1 hour. After curing of the lacquer a transparent wear-resistant layer was obtained.

### Example 8

A mixture of 19.6 g GLYMO and 30 g ethanol was added to 44 g Ludox AS-40 while the solution was stirred. After 2 minutes 6.3 g tetra-methyl orthosilicate (TMOS) was added. After stirring during 7 minutes, a mixture of 9.3 g ZrEAA and 3.9 g A1EAA was added. The pH was measured to be 7.8.

Hydrolysis of the silanes was complete after 15 minutes. After curing of the lacquer a transparent and wear-resistent layer was obtained.

### Example 9 (comparative example)

Half of a mixture of 19.6 g GLYMO, 8.6 g TEOS and 30 g alcohol was added to 44 g Ludox AS40, while the solution was stirred. After 2 minutes the other half of the mixture was added. Subsequently, 2.8 g ammonia (25%) was added to the solution. The pH was measured to be 10.5.

Hydrolysis of the silanes was completed within 1 hour. After curing of the lacquer a cloudy, brittle layer was obtained.

### Example 10: Testing of the lacquer, obtained by applying the compositions of examples 5-8 on a substrate and curing said lacquer compositions

A quantity of 3 g aluminum pigment (E2140 of Silberline) was added to each of the lacquer compositions prepared according to examples 5, 6, 7 and 9, respectively, and dispersed under stirring. The lacquer compositions obtained were sprayed on a substrate of IXEF 1032 (Solvay polyarylamide 60%GF), resulting in a metallic appearance of the substrate. Thereupon, the coatings were cured at 160°C during 20 minutes. A coating thickness of 20 micron was obtained.

The chemical resistances of the lacquers were tested by immersing the coated substrate in commercial shaving lotions during 28 days. The lacquer coatings passed said test without being attacked of softened.

The mechanical resistances of the lacquers were tested by bringing the lacquer coatings into contact with a rotating disc-shaped abrasive sponge (Scotch Brite), with a compressive force of 500 g during 20 minutes. After said treatment, no signs of wear were observed.

## Claims

1. A lacquer composition, obtainable by a method comprising the steps of mixing together an organosilane compound and silica particles under basic conditions, **characterized in that** a metal alkoxide is added to the basic reaction mixture.

2. A lacquer composition according according to claim 1, **characterized in that** the metal alkoxide is a zirconium alkoxide, an aluminum alkoxide, a titanium alkoxide or a mixture thereof.

3. A lacquer composition according to claim 1 or 2, **characterized in that** the metal alkoxide comprises a metal diketonate.

4. A lacquer composition according to claim 1, **characterized in that** the organosilane compound is an epoxysilane.

5. A lacquer composition according to claim 4, **characterized in that** the epoxysilane is 3-glycidyloxypropyltrimethoxysilane.

6. A lacquer composition according to claim 1, **characterized in that** at least a second organosilane compound is present.

7. A lacquer composition according to claim 6, **characterized in that** the second organosilane compound comprises a tetra-alkoxysilane.

8. A method of applying a lacquer coating to a substrate in which method a lacquer composition is applied to the substrate and cured, thereby forming the lacquer coating, **characterized in that** a lacquer composition as claimed in claims 1-7 is used.

9. Product provided with a lacquer coating, **characterized in that** the lacquer coating is obtained by using the method as claimed in claim 8.

10. A starting material composition for obtaining a lacquer composition as claimed in any of the claims 1-7, comprising an organosilane compound, silica particles, a base, and a metal alkoxide.

## Patentansprüche

1. Lackzusammensetzung, erhältlich nach einem Verfahren, das die nachfolgenden Verfahrensschritte umfasst: das Zusammenmischen einer Organo-Silanverbindung mit Siliziumdioxidteilchen unter basischen Umständen, **dadurch gekennzeichnet, dass** dem basischen Reaktionsgemisch ein Metallalkoxid hinzugefügt wird.

2. Lackzusammensetzung nach Anspruch 1, **dadurch gekennzeichnet, dass** das Metallalkoxid ein Zirkonalkoxid, ein Aluminiumalkoxid, ein Titanalkoxid oder ein Gemisch derselben ist.

3. Lackzusammensetzung nach Anspruch 1 oder 2, **dadurch gekennzeichnet, dass** das Metallalkoxid ein Metalldiketonat aufweist.

4. Lackzusammensetzung nach Anspruch 1, **dadurch gekennzeichnet, dass** die Organo-Silanverbindung ein Epoxysilan ist.

5. Lackzusammensetzung nach Anspruch 4, **dadurch gekennzeichnet, dass** das Epoxysilan 3-Glyzidyloxypropyltrimethoxysilan ist.

6. Lackzusammensetzung nach Anspruch 1, **dadurch gekennzeichnet, dass** wenigstens eine zweite Organo-Silanverbindung vorhanden ist.

7. Lackzusammensetzung nach Anspruch 6, **dadurch gekennzeichnet, dass** die zweite Organo-Silanverbindung ein Tetra-Alkoxysilan enthält.

8. Verfahren zum Anbringen eines Lackschutzschicht auf einem Substrat, wobei bei diesem Verfahren eine Lackzusammensetzung auf dem Substrat angebracht und zum Aushärten gebracht wird, wodurch die Lackschutzschicht gebildet wird, **dadurch gekennzeichnet, dass** eine Lackzusammensetzung nach Anspruch 1 bis 7 verwendet wird.

9. Produkt mit einer Lackschutzschicht, **dadurch gekennzeichnet, dass** die Lackschutzschicht durch Anwendung des Verfahrens nach Anspruch 8 erhalten wird.

10. Ausgangsmaterialzusammensetzung zum erhalten einer Lackzusammensetzung nach einem der Ansprüche 1 bis 7, mit einer Organo-Silanverbindung, Siliziumdioxidteilchen, einer Base und einem Metallalkoxid.

## Revendications

1. Composition de vernis-laque qui peut être obtenue par un procédé comprenant les étapes suivantes consistant à mélanger ensemble un composé de silane organique et des particules de silice sous des conditions de base, **caractérisée en ce qu'**un alcoxyde de métal est ajouté au mélange de réaction de base.

2. Composition de vernis-laque selon la revendication 1, **caractérisée en ce que** l'alcoxyde de métal est un alcoxyde de zirconium, un alcoxyde d'aluminium, un alcoxyde de titane ou un mélange de ceux-ci.

3. Composition de vernis-laque selon la revendication 1 ou selon la revendication 2, **caractérisée en ce que** l'alcoxyde de métal comprend un dicétonate de métal.

4. Composition de vernis-laque selon la revendication 1, **caractérisée en ce que** le composé de silane organique est un silane époxyde.

5. Composition de vernis-laque selon la revendication 4, **caractérisée en ce que** le silane époxyde est un 3-glycidyloxypropyltriméthoxysilane.

6. Composition de vernis-laque selon la revendication 1, **caractérisée en ce qu'**au moins un deuxième composé de silane organique est présent.

7. Composition de vernis-laque selon la revendication 6, **caractérisée en ce que** le deuxième composé de silane organique comprend un tétra-alcoxysilane.

8. Procédé d'application d'une couche de revêtement de vernis-laque sur un substrat, procédé dans lequel une composition de vernis-laque est appliquée sur le substrat et est durcie, de ce fait formant la couche de revêtement de vernis-laque, **caractérisé en ce qu'**il est utilisé une composition de vernis-laque selon les revendications précédentes 1 à 7.

9. Produit qui est pourvu d'une couche de revêtement de vernis-laque, **caractérisé en ce que** la couche de revêtement de vernis-laque est obtenue par la mise en oeuvre du procédé selon la revendication 8.

10. Composition du matériau de départ pour obtenir une composition de vernis-laque selon l'une quelconque des revendications précédentes 1 à 7, comprenant un composé de silane organique, des particules de silice, une base et un alcoxyde de métal.
